# EUROPEAN PATENT APPLICATION

(11) **EP 4 841 928 A1**
(43) Date of publication of application: **18.11.2026**
(21) Application number: 25218397.5
(22) Date of filing: 25.11.2025
(51) Int. Cl.: H04L 9/00

(54) **SYSTEM, APPARATUS, AND METHOD FOR DATA PROCESSING FOR HOMOMORPHIC OPERATIONS**

(30) Priority: 13.05.2025 KR 20250061746
(71) Applicant: LG Electronics Inc., Yeongdeungpo-gu Seoul 07336 (KR)
(72) Inventor: KO, Hajoon, 07796 Seoul (KR); OH, Jaeky, 07796 Seoul (KR); YOON, Byoungwoo, 07796 Seoul (KR); JEONG, Minwook, 07796 Seoul (KR); LEE, Sunim, 07796 Seoul (KR); SHIN, Jongho, 07796 Seoul (KR)
(74) Representative: Vossius & Partner Patentanwälte Rechtsanwälte mbB

(57) **Abstract**

A data processing system is proposed. The system includes: at least one processor; and a memory configured to store data obtained by the at least one processor. The at least one processor may be configured to: obtain source code of an original program; distinguish variables in the source code as plaintext input variables or ciphertext input variables; generate code fragments corresponding to execution paths, excluding execution paths including branching conditional statements with ciphertext input variables, among all execution paths in the source code; and compile the generated code fragments to obtain homomorphic encryption binary fragments.

## Description

This application claims the benefit of earlier filing date and right of priority to Korean Patent Application No. 10-2025-0061746, filed on May 13, 2025, the contents of which are hereby incorporated by reference herein in their entirety.

### BACKGROUND

### Technical Field

The present disclosure relates to a system, apparatus, and method for data processing for homomorphic operations. More particularly, the present disclosure relates to a system, apparatus, and method for obtaining a path configured with path branching conditions, which include input variables that do not require homomorphic encryption among the input variables of a user, and enabling homomorphic operations to be executed on plaintext input variables for code segments corresponding to each obtained path.

### Discussion of the Related Art

Machine learning models provide various inference capabilities that make modern life more convenient and intelligent. These systems contribute to improving the quality of daily life by analyzing the living patterns, environmental data, and personal health information of users and offering personalized services.

Homomorphic encryption technology is capable of solving the problem of personal data leakage when machine learning services are implemented on cloud and external servers. Homomorphic encryption is an advanced cryptographic technique that allows computations to be performed on encrypted data without decryption. Users may encrypt data and store the encrypted data on external servers such as a cloud, and various calculations such as arithmetic operations may be performed even on the encrypted data. For example, if a user encrypts two numbers and transmits the numbers to a server, the server may perform addition, subtraction, multiplication, and division operations on the two encrypted numbers. The computation result is also encrypted. That is, the server returns the encrypted final result to the user, and the user decrypts the encrypted result locally. The key point in this process is that the server does not need to know, and is incapable of knowing, the actual content of the data in order to perform the computation. In other words, homomorphic encryption is a technology that allows necessary computations to be performed externally while ensuring the confidentiality of the data. Such characteristics of homomorphic encryption may be effectively utilized in fields such as Internet of Things (IoT) smart homes and home healthcare services, where secure data processing, analysis, and personal data protection are crucial.

One of the most significant drawbacks of homomorphic encryption is that it requires significantly more resources and computation time compared to regular operations. Excessive computation time may lead to service delays for clients, and excessive resource usage may cause overloads on the server providing services.

### SUMMARY

Accordingly, aspects of the present disclosure are directed to a system, apparatus, and method for data processing for homomorphic operations that substantially obviate one or more problems due to limitations and disadvantages of the related art.

Aspects of the present disclosure aim to provide a system, apparatus, and method for data processing for homomorphic operations.

Additional advantages, objects, and features of embodiments of the disclosure will be set forth in part in the description which follows and in part will become apparent to those having ordinary skill in the art upon examination of the following or may be learned from practice of the disclosure. The objectives and other advantages of embodiments of the disclosure may be realized and attained by the structure particularly pointed out in the written description and claims hereof as well as the appended drawings.

To achieve these objects and other advantages and in accordance with the purpose of the disclosure, as embodied and broadly described herein, a data processing system includes: at least one processor; and a memory configured to store data obtained by the at least one processor. The at least one processor may be configured to: obtain source code of an original program; distinguish variables in the source code as plaintext input variables or ciphertext input variables; generate code fragments corresponding to execution paths, excluding execution paths including branching conditional statements with ciphertext input variables, among all execution paths in the source code; and compile the generated code fragments to obtain homomorphic encryption binary fragments.

Additionally or alternatively, the at least one processor may be configured to: obtain input variables consisting of plaintext input variables or ciphertext input variables; and executing homomorphic operations on the obtained input variables, based on homomorphic encryption binary fragments including branching conditional statements satisfied by the plaintext input variables of the obtained input variables, among the obtained homomorphic encryption binary fragments.

Additionally or alternatively, the at least one processor may be configured to provide a result of the execution of the homomorphic operations to a user.

Additionally or alternatively, the at least one processor may be configured to: perform dynamic symbolic execution on the source code; and obtain code fragments for each execution path where the dynamic symbolic execution is performed.

Additionally or alternatively, the at least one processor may be configured to: perform dynamic symbolic execution on partial paths up to the branching conditional statements with the ciphertext input variables, for the execution paths including the branching conditional statements with the ciphertext input variables among all execution paths in the source code; obtain code fragments for the partial paths where the dynamic symbolic execution is performed; and obtain code fragments by combining the obtained code fragments for the partial paths with code fragments for remaining partial paths after the branching conditional statements.

Additionally or alternatively, the at least one processor may be configured to: perform the dynamic symbolic execution on partial paths up to a specific branching conditional statement, for execution paths where a solution for plaintext input variables included in the specific branching conditional statement fails to be found among all execution paths in the source code; obtain code fragments for the partial paths where the dynamic symbolic execution is performed; and obtain code fragments by combining the obtained code fragments for the partial paths with code fragments for remaining partial paths after the specific branching conditional statement.

Additionally or alternatively, the at least one processor may be configured to: match the generated code fragments with the branching conditional statements corresponding to the generated code fragments; determine branching conditional statements satisfied by the plaintext input variables of the input variables; and execute the homomorphic operations on the plaintext input variables based on the code fragments matched with the determined branching conditional statements.

Additionally or alternatively, branching conditional statements corresponding to the generated code fragments may not be compiled.

Additionally or alternatively, the system includes a display configured to output a user interface. The user interface may include a user interface component configured to receive input variables and an input regarding whether to designate the input variables as plaintext input variables.

Additionally or alternatively, the user interface may include a user interface component configured to output information about a computational load reduction rate of homomorphic operations due to input variables not being designated as ciphertext input variables, in executing the homomorphic operations on the input variables based on the obtained homomorphic encryption binary fragments.

Additionally or alternatively, the user interface may include a user interface component configured to select whether to perform additional dynamic symbolic execution on a specific branching conditional statement, based on being unable to find a solution for plaintext input variables of the specific branching conditional statement included in an execution path of the original program.

Additionally or alternatively, the user interface may include a user interface component configured to request to input a solution for plaintext input variables of a specific branching conditional statement, based on being unable to find the solution for the plaintext input variables of the specific branching conditional statement included in an execution path of the original program. The user interface component may be configured to display information about the specific branching conditional statement.

In the present disclosure, provided herein is a data processing method. The data processing method includes: obtaining source code of an original program; distinguishing variables in the source code as plaintext input variables or ciphertext input variables; generating code fragments corresponding to execution paths, excluding execution paths including branching conditional statements with ciphertext input variables, among all execution paths in the source code, and compiling the generated code fragments to obtain homomorphic encryption binary fragments.

In the present disclosure, provided herein is a computer-readable medium storing a computer program including code configured to perform the above-described method.

It will be understood by those skilled in the art that the above-described aspects of the present disclosure are merely part of various embodiments of the present disclosure, and various modifications and alternatives could be developed from the following technical features of the present disclosure.

Embodiments of the present disclosure have the following effects.

According to one or more embodiments of the present disclosure, a client may receive inference capabilities without exposing personal information thereof to a server.

According to one or more embodiments of the present disclosure, a server may perform homomorphic operations on homomorphically encrypted data of a user in a more efficient manner, thereby reducing the computation time and computational load of the server and decreasing the data processing latency experienced by the user.

The effects according to embodiments of the present disclosure are not limited to what has been particularly described hereinabove, and any other effects not mentioned may be clearly understood by those skilled in the art to which the present disclosure pertains from the following detailed description.

### BRIEF DESCRIPTION OF THE DRAWINGS

The accompanying drawings, which are included to provide a further understanding of the disclosure and are incorporated in and constitute a part of this application, illustrate embodiment(s) of the disclosure and together with the description serve to explain the principle of the disclosure. In the drawings:
FIG. 1 is a diagram illustrating an existing system for processing or analyzing encrypted data;
FIG. 2 illustrates an existing privacy-preserving machine learning (PPML) system based on homomorphic encryption;
FIG. 3 illustrates a PPML system that separates user-side input variable data into sensitive data that requires encryption and general data that does not require encryption for processing;
FIG. 4 illustrates an example code to explain dynamic symbolic execution;
FIG. 5 illustrates a final execution path tree obtained by analyzing the code in FIG. 4 based on dynamic symbolic execution;
FIG. 6 illustrates a final execution path tree based on a first example code;
FIG. 7 illustrates some paths executed for plaintext input variables in a final execution path tree of the first example code according to at least one embodiment of the present disclosure;
FIG. 8 illustrates a block diagram of a system for data processing according to at least one embodiment of the present disclosure;
FIG. 9 illustrates a flowchart of a data processing method based on the system shown in FIG. 8 according to at least one embodiment of the present disclosure;
FIGS. 10 to 14 illustrate the configurations of user interfaces for data processing according to at least one embodiment of the present disclosure;
FIG. 15 illustrates a block diagram of a data processing system according to an embodiment of the present disclosure;
FIG. 16 illustrates a block diagram of a device for data processing according to at least one embodiment of the present disclosure; and
FIG. 17 illustrates a block diagram of a device for data processing according to at least one embodiment of the present disclosure.

### DETAILED DESCRIPTION

Hereinafter, embodiments of the present disclosure will be described in detail with reference to the attached drawings. In this specification, the same or equivalent components will be provided with the same reference numbers, and description thereof will not be repeated. The suffixes "module" and "unit" used for the components in the following description are assigned or used for convenience of description, and do not inherently have distinct meanings or roles. The suffixes are employed solely for ease of reference and should not be considered to convey unique distinctions in meaning or function. If it is deemed that detailed descriptions of the related art obscure the gist of the embodiments disclosed in this specification, the detailed descriptions will be omitted. It should be understood that the attached drawings are merely to provide better understanding of the embodiments disclosed herein and the technical concepts of the present disclosure are not limited to the attached drawings. Thus, the present disclosure should be construed to encompass all alterations, equivalents, and alternatives within the scope of the concepts and technologies disclosed in the present disclosure.

While terms such as "first," "second," and so on may be used to describe various components, the aforementioned components are not limited by these terms. The above terms are used only to distinguish one component from another.

When a component is mentioned to be "connected" or "coupled" to another component, it may be directly connected or coupled to the other component, but it should be understood that there could also be other components in between. On the other hand, when a component is mentioned to be "directly connected" or "directly coupled" to another component, it should be understood that there are no other components in between.

Unless singular expressions clearly indicate otherwise in context, the singular expressions encompass plural expressions.

In the present disclosure, terms such as "comprises" or "includes" are intended to indicate the presence of features, numbers, steps, operations, components, parts, or combinations thereof as specified in the specification, rather than to preclude the presence or possibility of one or more other features, numbers, steps, operations, components, parts, or combinations thereof.

Hereinafter, the term "client" refers to a computer or a portable terminal capable of accessing a server or another terminal via a network. The computer may include, for example, a notebook, desktop, or laptop equipped with a web browser, as well as smart home Internet-of-Things (IoT) devices. The portable terminal may include, for example, a wireless communication device ensuring portability and mobility, such as a smartphone, smartwatch, smart ring, smart glasses, smart brain chip, Personal Communication System (PCS), Global System for Mobile communications (GSM), Personal Digital Cellular (PDC), Personal Handyphone System (PHS), Personal Digital Assistant (PDA), International Mobile Telecommunication (IMT)-2000, Code Division Multiple Access (CDMA)-2000, Wideband Code Division Multiple Access (W-CDMA), and Wireless Broadband Internet (WiBro) terminals, among other types of handheld wireless communication devices. In addition, the term "network" may refer to any type of wired or wireless communication network, including a Local Area Network (LAN), Wide Area Network (WAN), Value Added Network (VAN), mobile radio communication network, or satellite communication network.

Prior to the detailed description of embodiments of the present invention, it should be noted that the term "machine learning inference model" may be used interchangeably with "machine learning model" or simply "model" hereinafter.

In the following description, a homomorphic encryption-based random forest or XGBoost model will be used as an example for purposes of description. However, embodiments of the present invention are not limited thereto and propose an inference method applicable to ensemble decision tree models more generally.

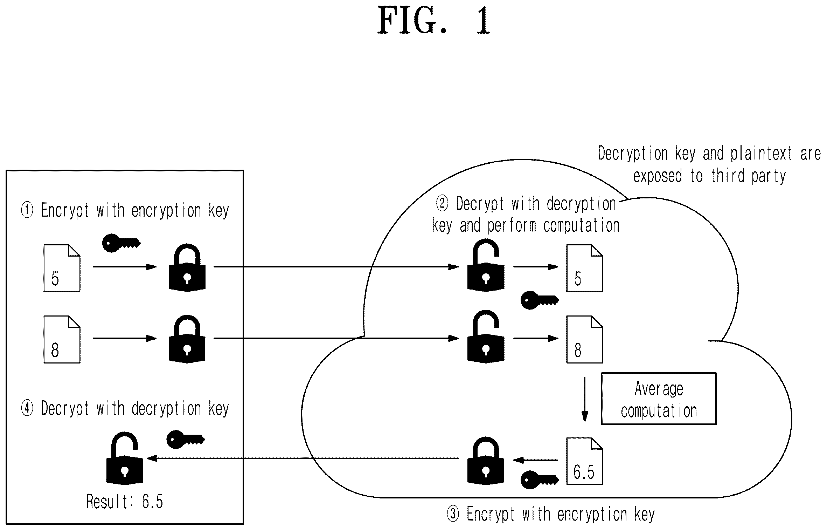

FIG. 1 is a diagram illustrating an existing system for processing or analyzing encrypted data.

A basic explanation of data analysis based on existing encryption technologies will be provided. A client (individual) may encrypt data with an encryption key and transmit the data to a server. The server may decrypt the data with a decryption key and perform computations to carry out data analysis. The server then encrypts the data analysis results and transmits the results back to the client, and the client may decrypt and obtain the data analysis results.

Such aspects expose the decryption key and plaintext to the server for data analysis, which requires the assumption that the trustworthiness of the server is guaranteed. Additionally, encryption algorithms currently in use may be vulnerable to threats posed by quantum computing.

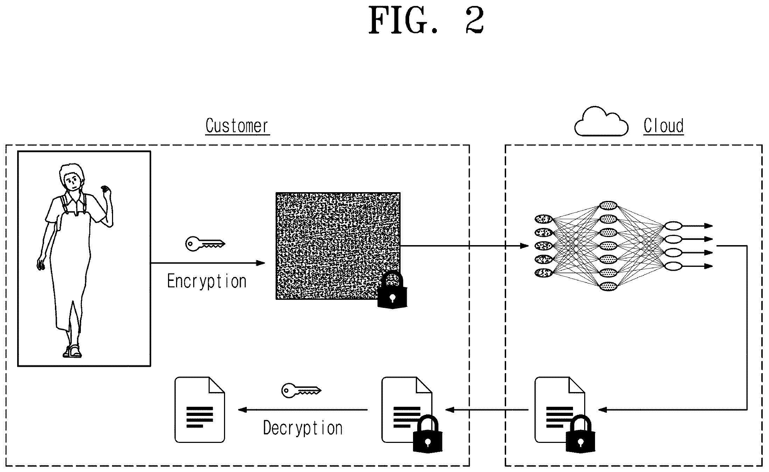

FIG. 2 illustrates an existing privacy-preserving machine learning (PPML) system based on homomorphic encryption.

Homomorphic encryption is a technology that allows computations on data without decryption (e.g., data that has not been decrypted) and possesses the characteristics of learning with errors (LWE), which is quantum-resistant, thereby ensuring the safe ownership and use of data. However, homomorphic encryption leads to increased computation time and data size compared to plaintext, and particularly, homomorphic encryption poses a greater burden (greater computational burden) when providing artificial intelligence/machine learning (AI/ML) services. In particular, while simple data analysis is possible, it may be difficult to provide real-time services to customers.

As the size (or amount) of customer data for service provision increases, the size of (or computational burden associated with) homomorphic encryption also grows, and the size of ML models used increases as well, requiring more computation and memory.

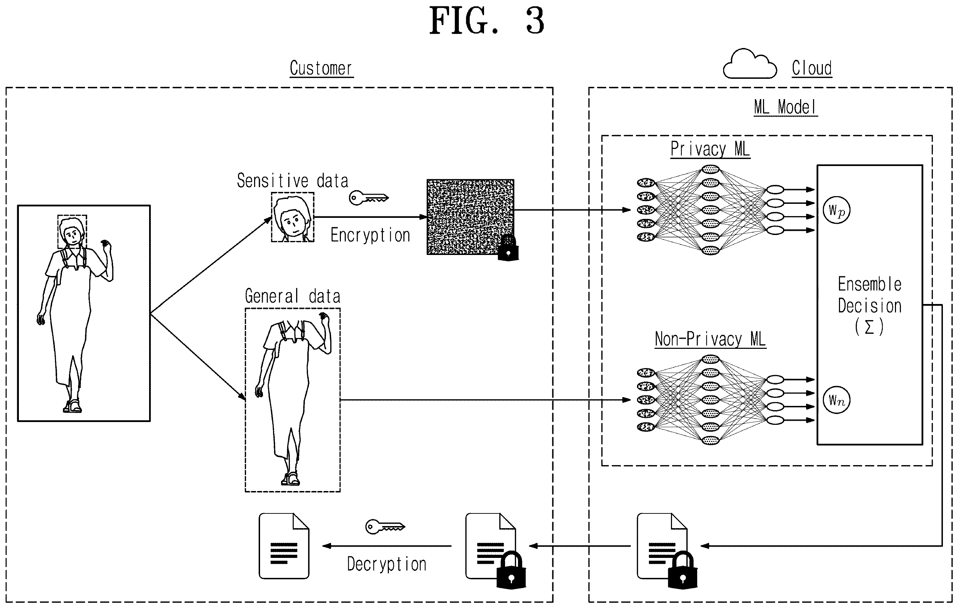

FIG. 3 illustrates a PPML system that separates user-side input variable data into sensitive data that requires encryption and general data that does not require encryption for processing.

The system may be designed as follows. Personal data may be divided into sensitive data and general data. Homomorphic encryption is applied only to the sensitive data and used in a private ML (privacy ML model) of the cloud, while the general data is transmitted to a non-private ML (non-privacy ML model) for inference on plaintext.

The homomorphic encryption inference part or portion (sensitive data) and the plaintext inference part or portion (general data) may be combined based on an ensemble technique to determine the final value. Ensemble techniques combine multiple models in ML to create a stronger model. Since individual models complement the weaknesses of each other, the individual models generally provide better predictive performance than a single model.

However, simply separating sensitive data and general data has limitations in reducing the execution speed and computational load of an original program, which forms the basis of private ML.

A fully homomorphic encryption (FHE) compiler is capable of converting native source code, such as C or C++, into specialized binaries or intermediate representations (IRs). In this case, all variables and constants are encoded in the form of FHE plaintext or ciphertext, and each operation is replaced by a homomorphic operation. For example, operations such as encrypted slot-based vector addition, multiplication, and slot rotation are used as replacements. A program (server) compiled with FHE receives an encrypted input (ciphertext) from a client, processes the encrypted input based on homomorphic operations, and then returns the encrypted result. Since the only entity capable of decrypting the result is the client, the server is incapable of knowing any information about (or the meaning of) the input or output of the client. Similarly, only the client may check the final result without any knowledge of the internal logic of the server. Accordingly, developers may build privacy-preserving cloud services, such as encrypted ML models, that secure blockchain smart contracts, or data analysis.

The following first example code is related to the computation of annual balances (e.g., revenue, expenses, etc.) processed by a financial analysis server.

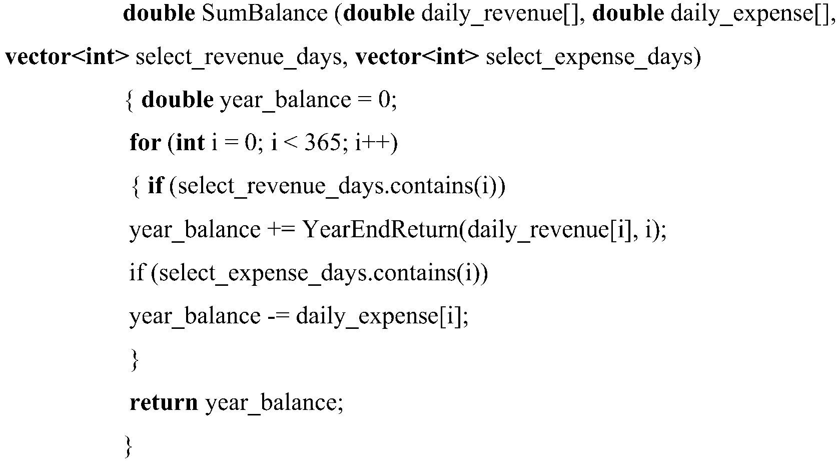

FHE compilation is a process of converting regular program code into a form that supports FHE operations. The FHE compiler automatically converts plaintext logic into a form capable of being executed with FHE. However, one of the most significant challenges when introducing FHE compilation is path explosion (exponential path generation) that occurs when there are conditional branches, such as if statements. In the above first example code, the loop, running for 365 days, sums up the daily revenue and expenses to calculate the year-end balance for a small business owner. After undergoing FHE compilation, the client transmits the daily revenue, expenses, and a specific date selection list to the server in encrypted form. The server performs homomorphic operations on the encrypted data and ultimately returns the encrypted year-end balance (i.e., year_balance). Only the client possesses a homomorphic encryption secret key, which allows the client to decrypt the encrypted year-end balance.

However, when a branching conditional statement (or branch conditional statement) (e.g., if (...)) is determined by encrypted input values, the server is incapable of actually knowing which branch is true (since the server does not know the encrypted values). Therefore, in theory, both branches should be executed. As in the above first example code, when there are nested branching conditions inside a loop, the number of possible paths may explode to as many as 4^365. Since FHE operations are often thousands of times slower than plaintext operations, such path explosion significantly impairs the practicality.

For example, below is a second example code,

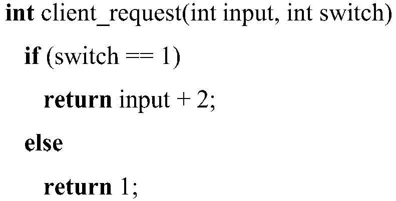

The compiled code for homomorphic operations for this purpose is as follows.

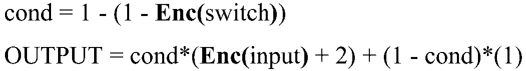

In other words, the result may be computed for each path of the code based on homomorphic operations, and the homomorphic operation results of the conditional statement of each path may be multiplied and summed up. Enc() represents the homomorphically encrypted values.

Furthermore, in order to compute all branches, a long computation chain and complex FHE parameters are required, which significantly increases the overhead. Most existing FHE compilers also face similar issues.

Interestingly, in most applications, it is not necessary for all inputs to remain encrypted. Referring to the above first example code, daily_revenue and daily_expense are sensitive financial information and should be encrypted, but select_revenue_days and select_expense_days may be simple query parameters that may be publicly disclosed to the server without major concerns. By relaxing the security requirements in this way, the server may eliminate (prune) many homomorphic operation paths that do not need to be executed, using the publicly available (plaintext) information.

According to various embodiments, a new method is introduced for paths where branching conditional statements are configured with plaintext input variables. This method analyzes the data flow of a program through a technique called dynamic symbolic execution, selects branching conditional statements that depend only on plaintext input variables, and factorizes the corresponding paths into separate code segments to perform FHE compilation. Each of the separated code segments is determined by plaintext input variables provided by the client at runtime, which defines "which code should be executed." As a result, unnecessary execution of entire paths may be avoided. Consequently, while achieving the same operational result as FHE, the number of actual executed branching paths is significantly reduced, leading to a substantial decrease in overhead.

In at least some embodiments, for the present proposal to be effective, it is necessary to accurately determine which branching conditional statements depend on encrypted input variables. In code more complex than the first example code, since specific local variables may be derived from ciphertext and used in branching conditional statements, it may be difficult to identify the variables through static analysis alone. According to at least one embodiment of the present proposal (disclosure), by clearly tracking data flows based on dynamic symbolic execution, it is possible to distinguish between paths that are safely removable and those that are not, thereby ensuring (or at least improving) the accuracy of execution.

Dynamic symbolic execution (DSE) is a software testing and analysis technique that combines concrete execution with symbolic reasoning to systematically explore various execution paths in a program. The goal of DSE is to automatically generate inputs that guide the program through different execution paths, thereby increasing code coverage (i.e., executing as many branches and paths in the code as possible) and discovering specific error states (e.g., exception points). The basic procedure according to one or more embodiments is as follows.

### 1. Initial Concrete Execution:

The program is executed based on arbitrary concrete input values. In this case, whenever a branching conditional statement such as if x > 10 appears, a DSE engine tracks the symbolic constraints related to the corresponding branch.

### 2. Path Condition Collection (Collect Path Constraints):

When the program is executed along a single path through specific branching conditional statements, the DSE engine records the conditions (constraints) imposed on symbolic variables (e.g., x+3 < 10x + 3 < 10x+3 < 10).

### 3. Finding Solutions for Path Leading to the Opposite Direction of Path Conditions (Solve for Alternative Paths):

At each branching point, the DSE engine uses a mathematical solver (i.e., satisfiability modulo theories (SMT) solver) to find input values that allow the program to explore previously unvisited paths (i.e., paths that produce the opposite result from the condition expression and logical judgment (true/false) at the branch).

### 4. Iterate to Explore Multiple Paths:

The DSE engine systematically explores all possible execution paths of the program by repeating the same process for each newly discovered path. Accordingly, the DSE engine may effectively identify edge cases, crashes, security vulnerabilities, and so on

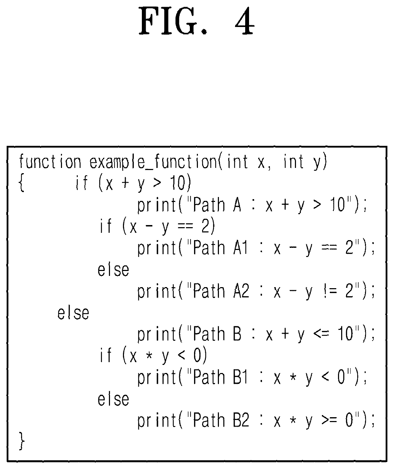

FIG. 4 illustrates an example code to explain DSE.

Hereinafter, an example operation of DSE will be explained based on the code in FIG. 4.

### [Initial Concrete Execution and Path Condition Collection]

The DSE engine executes the program based on concrete input values, x = 3 and y = 5. In the first branching conditional statement x + y > 10, 3 + 5 = 8, which is false. As a result, the program enters the else block, labeled "B". The DSE engine then outputs the message "Path B". Next, in the second branching conditional statement x * y < 0, 3 * 5 = 15, which is also false. Therefore, the DSE engine outputs the message "Path B2". Thus, the executed path is Path B2, and the corresponding path conditions (path constraints) are x + y ≤ 10 AND x * y ≥ 0. The DSE engine records these path constraints.

### [Obtaining Solutions for Path Leading to the Opposite Direction of Path Conditions, Concrete Execution, and Path Condition Collection]

To explore another branching path that has not been visited before (i.e., a path where the branching conditional statement x + y > 10 is true), the DSE engine requests input values that satisfy the branching conditional statement using the SMT solver. For example, a solution such as x = 6 and y = 5 may be found.

The DSE engine executes the program with input values x = 6 and y = 5. In the first branching condition, x + y > 10, 6 + 5 = 11, which is true. As a result, the program enters "Path A". The DSE engine then outputs the message "Path A". Next, in the second branching condition, x - y == 2?, is evaluated. Since 6 - 5 = 1, the condition is false. As a result, the DSE engine outputs the message "Path A2". Thus, the executed path is Path A2, and the corresponding path conditions are x + y > 10 AND x - y ≠ 2. The DSE engine records these path constraints.

### [Iteration]

The DSE engine may additionally explore paths that have not been visited, such as Path A1 and Path B1. To this end, the DSE engine request input values that satisfy the branching conditional statements for the paths, using the SMT solver. The DSE engine then obtains the corresponding input values and executes the program for each path.

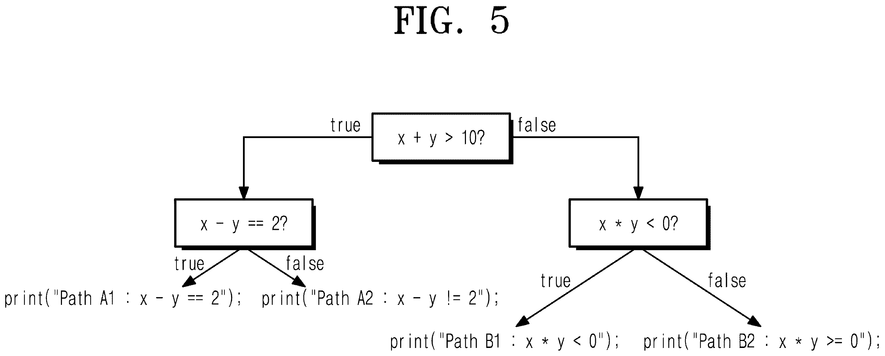

FIG. 5 illustrates a final execution path tree obtained by analyzing the code in FIG. 4 based on DSE.

As in the above example, DSE acts as a "smart tester" by combining concrete execution and symbolic analysis with an SMT solver to automatically find unvisited branches. In other words, the DSE engine may execute a program with one set of input values, and based on the information obtained from the execution, generate new input values to explore paths that are not covered, thereby discovering errors and edge cases much more effectively than conventional random or manual testing.

According to at least one embodiment, the present proposal (disclosure) utilizes DSE to discover all possible execution paths and related conditions in a program, converts each path into an FHE-applied binary segment (code snippet), and execute only path segments that satisfy client input variables, thereby improving the overall performance and flexibility of the FHE program.

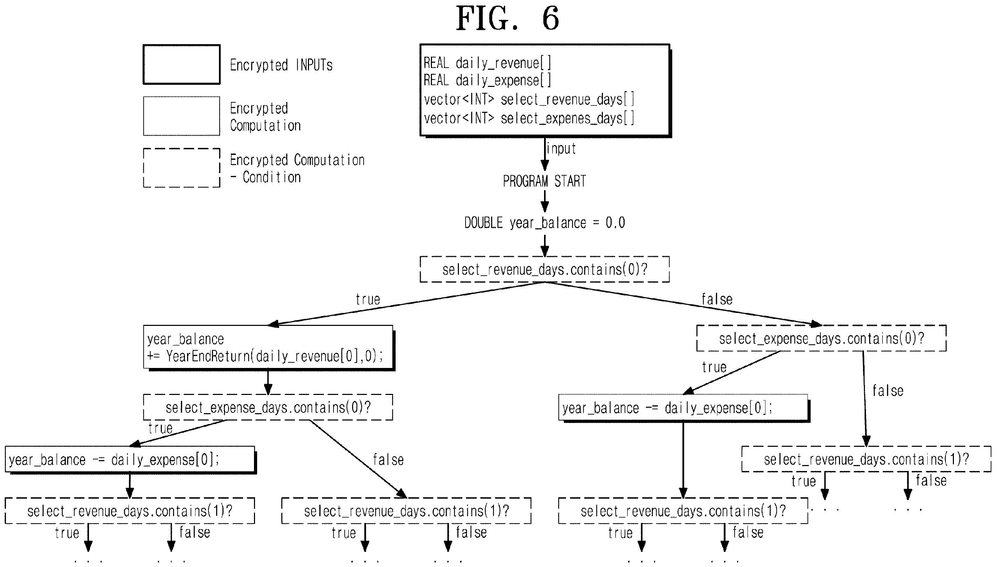

FIG. 6 illustrates a final execution path tree based on the first example code.

FIG. 6 shows a path tree obtained by performing DSE on the first example code, with the four input variables of the SumBalance function (daily_revenue, daily_expense, select_revenue_days, select_expenses_days) set as symbolic inputs. Existing FHE compilers typically regard all four input variables as the private data of a client, generally for compatibility with Single Instruction Multiple Data (SIMD) optimization techniques. Due to space constraints, only the first 1.5 iterations (about one and a half loops) of the 365 iterations are shown in FIG. 6. In each iteration, the year_balance variable is conditionally updated depending on whether the user selects the corresponding date (loop index). As shown in FIG. 6, each iteration may be split into a maximum of 4 branches because each iteration involves two if statements (i.e., branching conditional statements), each of which is (or can be) either true or false. As explained earlier, considering all 365 iterations of the year, the total number of possible paths is 4^365. Since homomorphic encryption (or FHE) needs to be applied to each of the paths, this leads to an enormous computational burden.

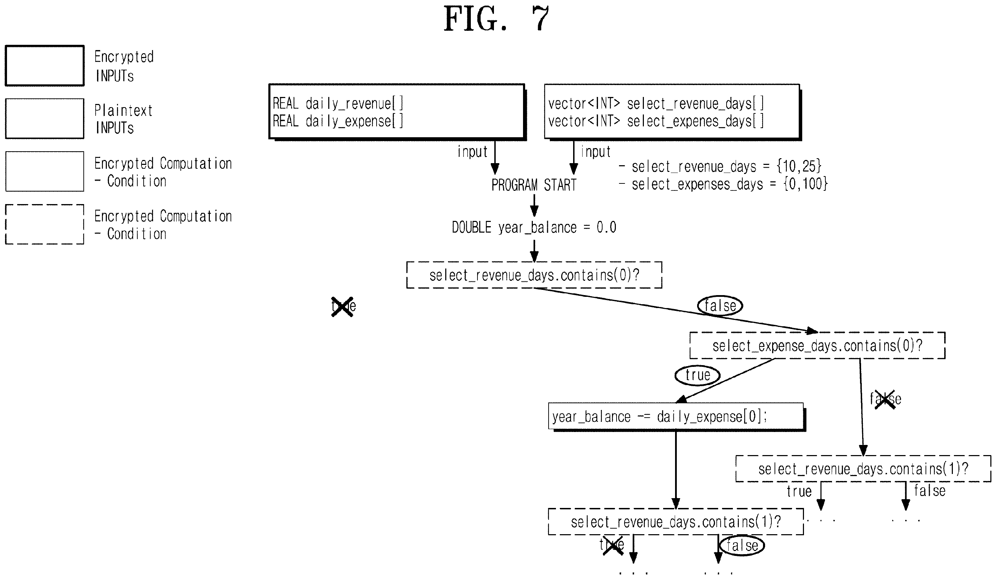

FIG. 7 illustrates some paths executed for plaintext input variables in a final execution path tree of the first example code according to at least one embodiment of the present disclosure.

FIG. 7 shows a scenario where daily _revenue and daily_expense are encrypted as sensitive data, while select_revenue_days and select_expenses_days are treated as less sensitive and provided in plaintext. In this scenario, a server reads and knows select_revenue_days and select_expenses_days in plaintext. After the final calculation, the only information the server knows is "which dates are selected," and the server may not access personal financial data (such as daily_revenue, daily_expense, and year_balance). In other words, the client sends select_revenue_days and select_expenses_days in plaintext to the server, while daily_revenue and daily_expense are sent as ciphertext.

In the DSE according to at least one embodiment of the present proposal (disclosure), the plaintext input variables of the client are treated as "plaintext symbols", and the ciphertext input variables of the client are treated as "ciphertext symbols". When the DSE engine encounters a new branching conditional statement, if the condition is composed solely of (or based solely on) plaintext symbols, processing is performed in the general manner as described earlier for DSE. However, if even one ciphertext symbol is included (or considered), the server may not determine whether the branching conditional statement is true or false at runtime. As a result, the DSE engine marks the branching conditional statement as "undetermined" and moves to another path without further in-depth exploration.

Referring to the first example code, all if statements in this code use only plaintext symbols. Therefore, when the server receives the plaintext input variables of the client, the server may immediately determine which path will actually be executed. For example, if the client provides plaintext values such as select_revenue_days = {10, 25} and select_expense_days = {0, 100}, the server may completely prune the paths that are faintly marked in FIG. 7 (paths that will not be executed) and execute only one path (the branch leading through false-true-false). However, FIG. 7 only shows some of the iterations relative to those illustrated in FIG. 6. Instead of processing 4^365 paths with homomorphic operations as shown in FIG. 6, the execution of the program may be completed the execution of a single path, i.e., with homomorphic operations.

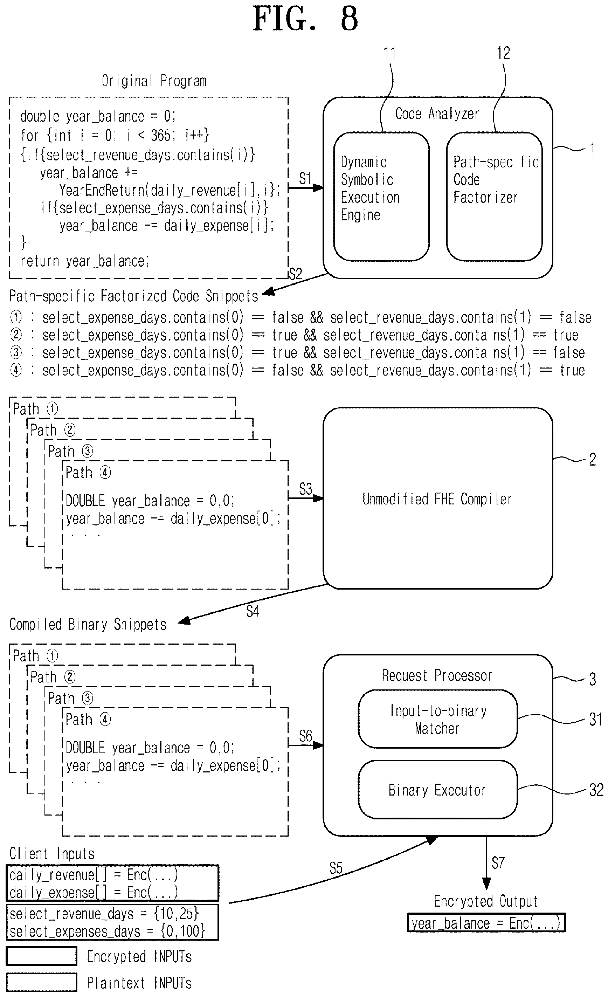

FIG. 8 illustrates a block diagram of a system for data processing according to at least one embodiment of the present disclosure.

The system for data processing according to the present disclosure may be broadly (or generally) composed of a code analyzer 1, an unmodified FHE compiler 2, and a client request handler 3.

The code analyzer 1 may be configured to obtain source code of an original program and perform DSE by distinguishing (e.g., classifying) each input variable in the source code as being either a plaintext symbol or a ciphertext symbol. As illustrated, the code analyzer 1 may be composed of a DSE engine 11 and a path-specific code factorizer 12.

Both plaintext symbols and ciphertext symbols are traced in the form of general symbolic representations, and the processing method varies when a branching conditional statement is reached. If the branching conditional statement only contains plaintext symbols (i.e., no ciphertext symbols in the branching conditional statement), the code analyzer 1 may perform the DSE as described above. The code analyzer 1 may mark branching conditional statements containing ciphertext symbols as "undetermined" and end the exploration of the corresponding path. Then, the code analyzer 1 may proceed to perform the DSE on other waiting paths.

Based on the results of the DSE, the code analyzer 1 divides the original program into several execution paths that are factorized according to plaintext symbol-based conditions and generates program code fragments corresponding to the logic of each path. In other words, code fragments are created for each path, and the code fragments do not include branching conditional statements. The branching conditional statements corresponding to the code fragments for each path may be managed and stored separately, and the branching conditional statements matching the code fragments for each path may be provided to the client request handler 3, which will be described in more detail later.

The unmodified FHE compiler 2 may compile the code fragments for each path into FHE-applied binary fragments (which are referred to as "homomorphic encryption binary fragments"). Accordingly, FHE binary fragments are generated for as many as the total number of paths divided into branching conditional statements based solely on plaintext symbols. Homomorphic operations may be performed on the divided paths based on each FHE binary fragment and the input variables (plaintext or ciphertext) of a client.

The plaintext input variables or ciphertext input variables of the client are provided, and the corresponding divided path is executed accordingly.

As illustrated, the compiled binary fragments may be obtained as the output of the FHE compiler 2. Additionally, since the branching conditional statements corresponding to each FHE binary fragment are obtained earlier, the branching conditional statements may be provided to the request handler 3 along with the FHE binary fragments.

The client may transmit input variables for data processing to the client request handler 3. In other words, the client request handler 3 may obtain the input variables. The input variables may include plaintext input variables and/or ciphertext input variables.

The client request handler 3 may include an input-to-binary matcher 31 and a binary executor 32.

The client request handler 3 may select branching conditional statement(s) for individual paths where the plaintext input variables are satisfied. The client request handler 3 may select FHE binary fragments corresponding to the individual paths that satisfy the branching conditional statements and perform homomorphic operations based on the input variables and the selected FHE binary fragments.

The client request handler 3 obtains the result of the homomorphic operations, that is, the encrypted result, and may return the encrypted result to the client.

The previous content has been explained from the perspective of the client and server, but it is understood that the same content may be applied in an embodiment where the client and server form a single system. In this case, the system may obtain the source code of the original program or the input variables from the client or user. S2 to S4 and S6 and S7 as illustrated in FIG. 8 may be performed in the system.

The client may be responsible for providing at least the source code of the original program (S1) and the input variables (S5), while the server may be responsible for executing homomorphic operations on the input variables and binary fragments (S7).

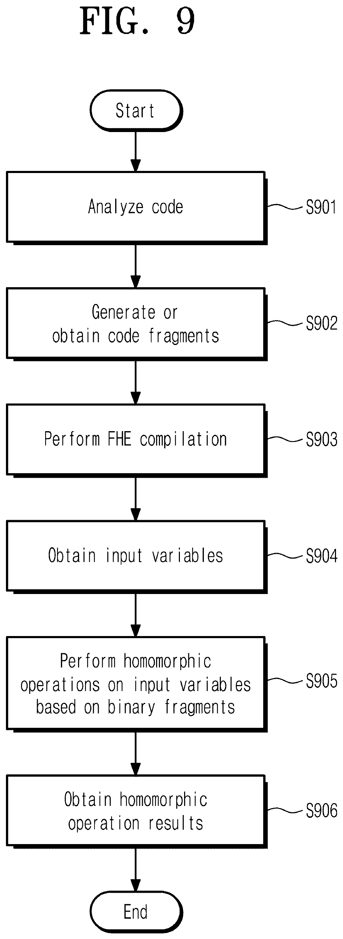

FIG. 9 illustrates a flowchart of a data processing method based on the system of FIG. 8 according to at least one embodiment the present disclosure. The method shown in FIG. 9 may be performed by the code analyzer 1, the unmodified FHE compiler 2, and the client request handler 3 as described earlier, or by a data processing system that includes the code analyzer 1, the unmodified FHE compiler 2, and the client request handler 3. Hereinafter, the data processing method will be described as being performed by the "data processing system" for purposes of simplicity.

The data processing system may be configured to analyze the source code of an original program (S901). More specifically, the data processing system may be configured to perform DSE on the source code of the original program and, accordingly, obtain individual paths that are divided based on branching conditional statements.

The data processing system may be configured to generate or obtain code fragments corresponding to the divided individual paths (S902). Additionally, the data processing system may be configured to obtain the branching conditional statements corresponding to each code fragment.

The data processing system may be configured to compile the code fragments corresponding to the divided individual paths into FHE-applied binary fragments (S903). Accordingly, binary fragments corresponding to the individual paths may be obtained.

The data processing system may be configured to obtain input variables from a user (S904).

The data processing system may be configured to perform homomorphic operations based on the input variables and the FHE-applied binary fragments (S905).

As a result, the data processing system obtains the result of the homomorphic operations (S906) and may return the result to the user.

S902 and S903 may be performed only for paths where the branching conditional statements are composed solely of (or based solely on) plaintext input variables. Accordingly, for paths that include branching conditional statements with (or based on) ciphertext input variables, code fragments are not obtained, and compilation may not be performed.

However, the data processing according to embodiments of the present disclosure involves (or may present) several technical challenges, and solutions to address these challenges will be proposed.

### [Unpredictable Input Variables]

Some application programming interfaces (APIs) in programming languages are designed to return unpredictable (non-deterministic) values, such as the current time or random numbers. Since the logic inside the APIs is unpredictable, it is difficult to directly convert the APIs into symbolic representations. Therefore, according to at least one embodiment of the present proposal (disclosure), whenever an API that returns unpredictable values is called, a new unique symbol is generated for the call point (and context) and included in the DSE analysis. Subsequently, when a client request (i.e., input variable acquisition) is received, the client request handler preemptively calls the APIs that generate the unpredictable values to concretize the actual values in advance. These values are then included in the path condition determination. During runtime, the same concretized values are used as the return values of the unpredictable APIs to perform homomorphic operations based on the corresponding binary fragments.

### [Unsolvable Path]

Branching conditional statements in some paths may be too complex for the SMT solver to find solutions that satisfy the branching conditional statements. In this case, the DSE engine may not determine whether the paths derived from the branching conditional statements are actually reachable in the program. According to at least one embodiment of the present proposal (disclosure), when faced with such a situation, DSE is halted for the subsequent code, and static analysis is applied. Then, a single code fragment is generated by combining the "DSE-processed front portion (single path)" and the "statistically analyzed rear portion (which may still have multiple branches)." The unmodified FHE compiler compiles this combined code based on FHE.

In practice, when the code fragment is executed based on the input variables of the client, the front portion of the code fragment is processed as a single path, while the rear portion may still need to be processed with homomorphic operations for multiple paths. Nonetheless, due to pruning of some paths in the front portion, the total number of paths is reduced, and as a result, the overall computational overhead is reduced.

### [Branching Conditional Statements Including Ciphertext Input Variables]

If a branching conditional statement includes ciphertext symbols, the server may not determine the actual values of ciphertext input variables provided by the client at runtime. Thus, the server may not know whether the input variables of the client satisfy the branching conditional statement. Thus, in this case, similar to the unsolvable path described above, the rear portion of the branching conditional statement may be processed through static analysis. Even in this case, if the statically analyzed rear portion contains multiple branching paths, the homomorphic operation overhead may increase. However, since the front portion of the branching conditional statement, which contains only plaintext input variables, is already pruned, the overall computational overhead may be reduced.

According to at least one embodiment of the present proposal (disclosure), individual code fragments are obtained for each execution path (leaf-ending execution path) in the source code of the original program, and FHE compilation is performed for the individual code fragments, which may reduce the computational load during the compilation. Furthermore, among FHE binary fragments where homomorphic operations are to be performed, fragments to be pruned may be determined. Thus, the computational load may be reduced and/or the computation speed may be improved.

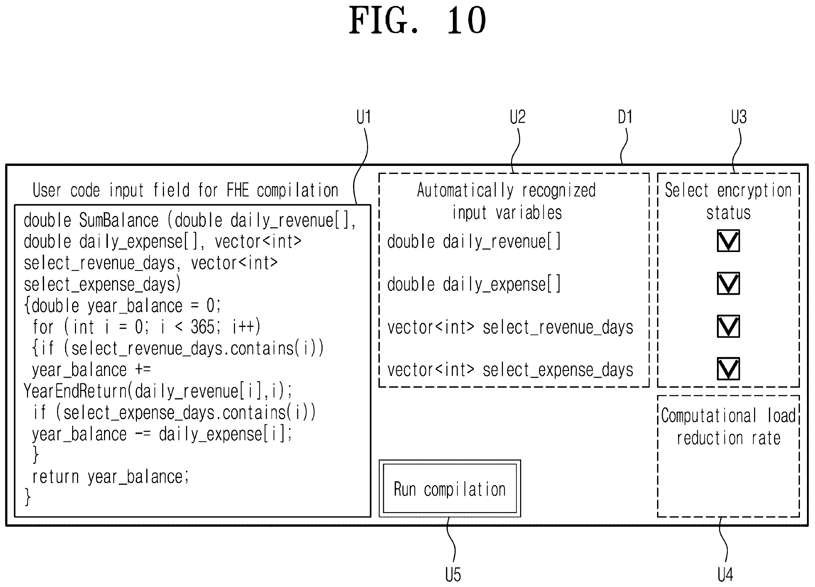

FIGS. 10 to 14 illustrate the configurations of user interfaces for data processing according to the present disclosure. The user interfaces of FIG. 10 to FIG. 13 may include information displayed on a human-machine interface D1 such as a display.

FIG. 10 shows an example where various user interface components are displayed on the human-machine interface.

A first user interface component U1 is a component for inputting the source code of an original program, which is the target of FHE compilation. A second user interface component U2 is a component for displaying input variables recognized from the source code of the original program inputted into U1. A third user interface component U3 is a component for determining whether the input variables recognized from the source code needs to be homomorphically encrypted. A fourth user interface component U4 is a component for displaying a computational load reduction rate when the input variables are not encrypted, and more particularly, when the input variables are not homomorphically encrypted.

The fifth user interface component U5 is a component for user inputs to command the execution of compilation, which may be input through a user touch input, a click input, and so on.

The computational load reduction rate may be displayed once the compilation execution is input through U5.

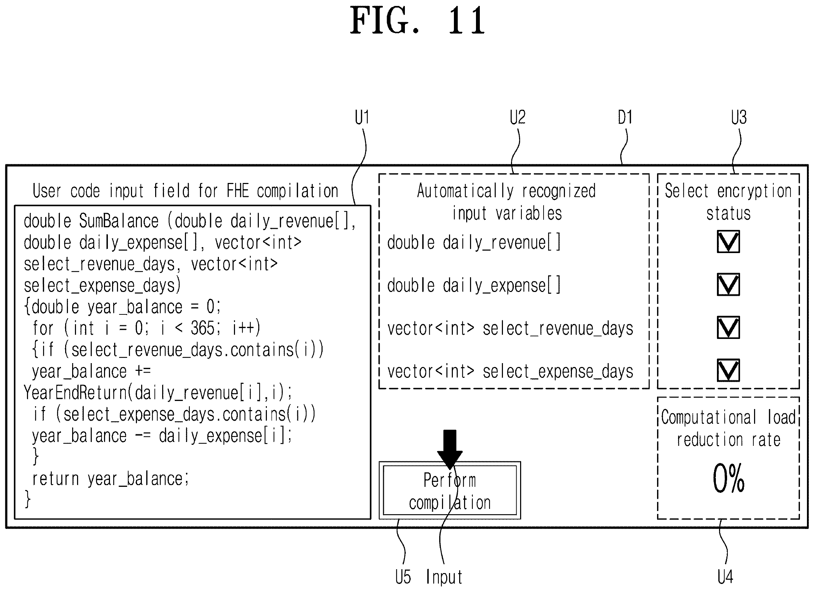

FIG. 11 shows an example where various user interface components are displayed on the human-machine interface.

FIG. 11 is mostly identical to FIG. 10, but unlike FIG. 10, FIG. 11 illustrates a case where a user input occurs for the fifth user interface component U5, FIG. 11 shows the computational load reduction rate is displayed in the fourth user interface component U4.

In FIG. 11, since encryption for all input variables is selected via the third user interface component U3, the computational load reduction rate may be displayed as 0%. The computational load reduction rate may represent a value in comparison to the case where all input variables are encrypted.

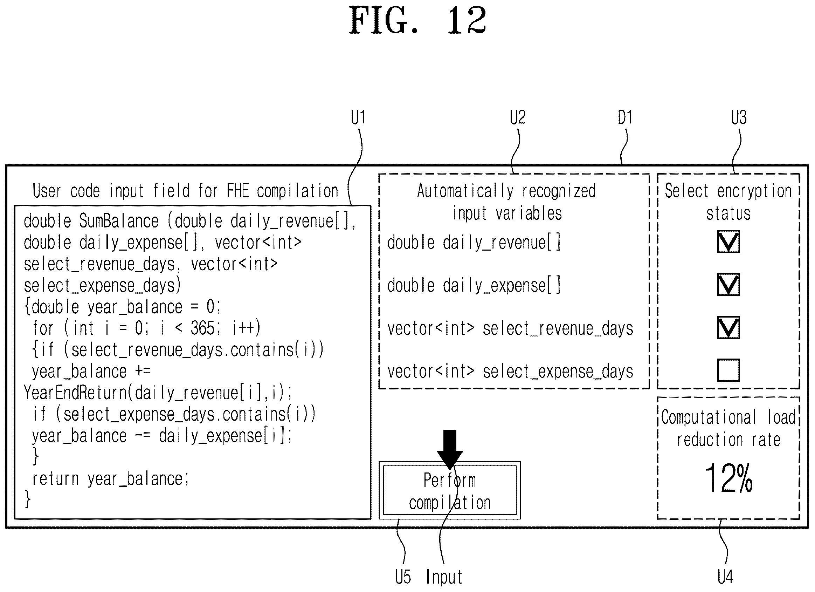

FIG. 12 shows an example where various user interface components are displayed on the human-machine interface.

FIG. 12 is mostly identical to FIG. 11, but unlike FIG. 11, FIG. 12 illustrates a case where the selection for encryption of one of the input variables is canceled. FIG. 12 shows that, based on a user input for the fifth user interface component U5, the computational load reduction rate is displayed via the fourth user interface component U4. As a result of canceling the selection for encryption of one of the input variables, the computational load reduction rate is displayed as 12%.

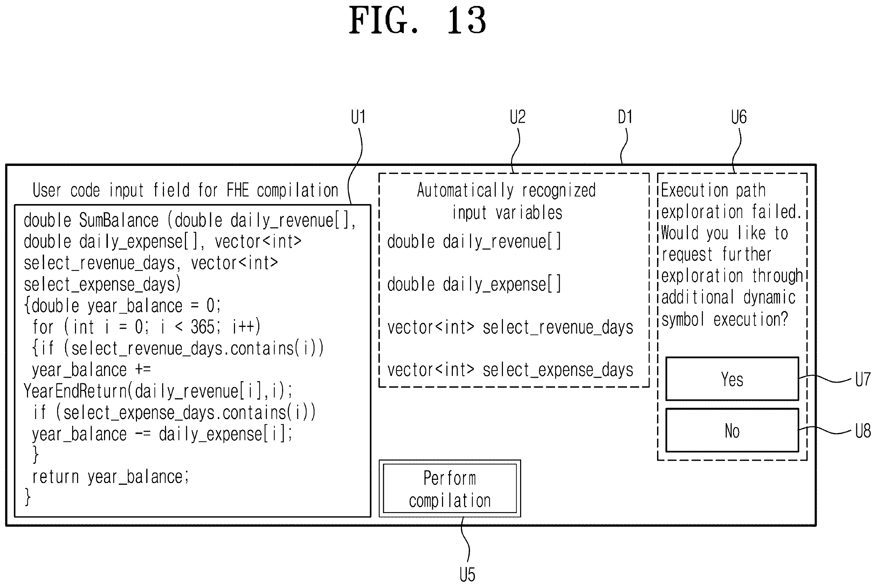

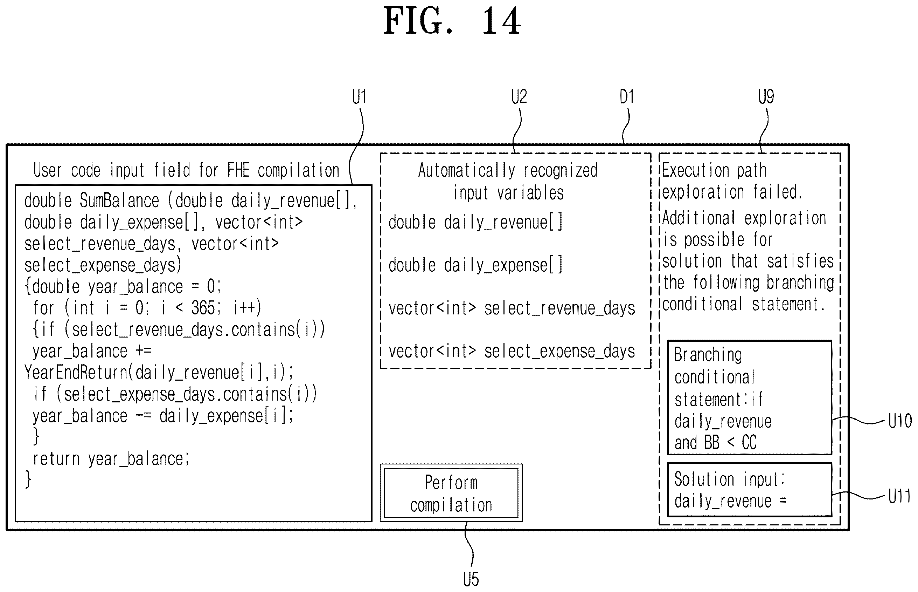

FIGS. 13 and 14 illustrate the configurations of user interfaces for requesting a user input when FHE compilation fails in relation to data processing according to the present disclosure.

Referring to FIG. 13, a sixth user interface component U6 may include a component for querying whether additional execution path exploration through DSE needs to be performed, after the failure of the execution path exploration. A seventh user interface component U7 is a component for requesting additional DSE, while an eighth user interface component U8 is a component for opting not to request additional DSE. Both components may receive an input through a user touch input or a click input. If additional DSE is requested, the data processing system (or code analyzer or DSE engine) may perform the additional DSE. This operation may be used when a timeout for DSE is configured, if DSE is not completed within a preconfigured timeout period.

Referring to FIG. 14, a ninth user interface component U9 may include a component for requesting the user to input a solution that satisfies a specific branching conditional statement when the execution path exploration fails because the solution for the branching conditional statement is not found. A tenth user interface component U10 may include a component for displaying the specific branching conditional statement for which the solution is not found. An eleventh user interface component U11 may include a component for inputting the solution that satisfies the specific branching conditional statement. When the user inputs the solution into the eleventh user interface component U11, the execution path exploration may resume. This operation may be used when a timeout for DSE is configured, if the solution for the specific branching conditional statement is not obtained via SMT within a preconfigured timeout period.

Additionally, although not shown in the drawing, a user interface component for displaying an execution path corresponding to at least part of the source code of the original program may be output on a user interface displayed on the human-machine interface D1 such as a display. In this case, the execution path may be displayed in a tree format.

Additionally, a user interface component for distinguishing and displaying plaintext input variables and ciphertext input variables may be output on a user interface displayed on the human-machine interface D1 such as a display. For example, as shown in FIG. 7, plaintext input variables (select_revenue_days[] and select_expense_days[]) and ciphertext input variables (daily_revenue[] and daily_expense[]) may be displayed separately.

Additionally, a user interface component for distinguishing and displaying general operation steps where homomorphic operations are performed and branching conditional statement operation steps where homomorphic operations are performed may be output on a user interface displayed on the human-machine interface D1 such as a display. For example, as shown in FIG. 7, the general operation steps where homomorphic operations are performed may be displayed with solid-line rectangles, and the branching conditional statement operation steps where homomorphic operations are performed may be displayed with dashed-line rectangles.

Additionally, although not shown in the drawing, a user interface component for displaying an execution path that includes branching conditional statements composed solely of plaintext input variables among execution paths may be output on a user interface displayed on the human-machine interface D1 such as a display.

Alternatively, a user interface component for displaying an execution path that includes branching conditional statements satisfied by the configuration values of plaintext input variables (entered by the user) among execution paths may be output on a user interface displayed on the human-machine interface D1 such as a display. For example, as shown in FIG. 7, an execution path that follows a sequence of false-true-false from the topmost branching conditional statement based on the plaintext input variable configuration values of the user may be displayed, while the remaining execution paths may be displayed in a dimmed manner.

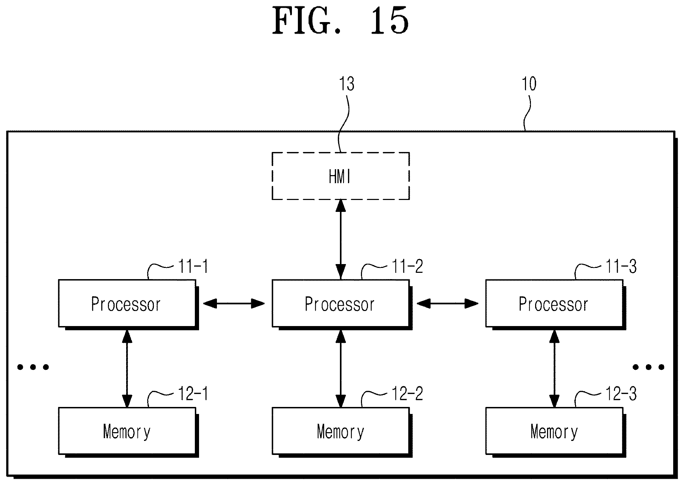

FIG. 15 illustrates a block diagram of a data processing system 10 according to at least one embodiment of the present disclosure.

The data processing system 10 may include at least one processor (11-1, 11-2, 11-3, ...) and at least one memory (12-1, 12-2, 12-3, ...).

The at least one processor may be configured to obtain the source code of an original program. The source code of the original program may be obtained by a user input or received from a user terminal (not shown).

The at least one processor may be configured to distinguish (classify) the variables included in the source code as plaintext input variables or ciphertext input variables. For example, referring to the first example code, there are a total of four variables (double daily_revenue[], double daily_expense[], vector<int> select_revenue_days, and vector<int> select_expense_days), and (each of) these variables may be distinguished as plaintext input variables or ciphertext input variables. Whether the input variables in the source code are plaintext or ciphertext may be specified by a user input (see FIGS. 10 to 12). Accordingly, at least one processor may distinguish between plaintext input variables and ciphertext input variables.

The at least one processor may be configured to generate code fragments corresponding to execution paths, excluding execution paths including branching conditional statements with ciphertext input variables, among all execution paths in the source code. Additionally, the at least one processor may be configured to compile the generated code fragments to obtain homomorphic encryption binary fragments. In this case, the branching conditional statements corresponding to the generated code fragments may not be compiled. In other words, since branching conditional statements are not included in the compilation step, the compilation process may be relatively simplified. The challenges of handling branching conditional statements have been explained in the compilation process of the second example code.

Accordingly, the at least one processor may handle or use the branching conditional statements as follows.

The at least one processor may be configured to match the generated code fragments with the branching conditional statements corresponding to the generated code fragments. The generated code fragments are separated from branching conditional statements for the execution of a corresponding portion of the source code. As a result, the code fragments and the corresponding branching conditional statements are matched, thereby determining whether or not to use the code fragments during homomorphic operations. In other words, the at least one processor may determine whether to prune an execution path corresponding to a specific code fragment based on input variables and branching conditional statements.

Additionally, the at least one processor may be configured to obtain input variables consisting of plaintext input variables or ciphertext input variables. The input variables may be provided or input by the user. The at least one processor may be configured to execute homomorphic operations on the obtained input variables, based on the homomorphic encryption binary fragments that include branching conditional statements satisfied by the plaintext input variables of the obtained input variables, among the obtained homomorphic encryption binary fragments.

Additionally, the at least one processor may be configured to transmit the result of the execution of the homomorphic operations to the client or user.

Additionally, the at least one processor may be configured to perform DSE on the source code and obtain code fragments for each of the execution paths where the DSE is performed.

Additionally, the at least one processor may be configured to perform DSE on partial paths up to the branching conditional statements with the ciphertext input variables, for the execution paths including the branching conditional statements with the ciphertext input variables among all execution paths in the source code and obtain code fragments for the partial paths where the DSE is performed. Further, the at least one processor may be configured to obtain code fragments by combining the obtained code fragments for the partial paths with code fragments for the remaining partial paths after the branching conditional statements.

Additionally, the at least one processor may be configured to perform the DSE on partial paths up to a specific branching conditional statement, for execution paths where a solution for plaintext input variables included in the specific branching conditional statement fails to be found among all execution paths in the source code and obtain code fragments for the partial paths where the DSE is performed. Further, the at least one processor may be configured to obtain code fragments by combining the obtained code fragments for the partial paths with code fragments for the remaining partial paths after the specific branching conditional statement.

The at least one processor may be configured to determine branching conditional statements satisfied by the plaintext input variables of the input variables and execute the homomorphic operations on the plaintext input variables based on the code fragments matched with the determined branching conditional statements.

The data processing system 10 may further include a human-machine interface (HMI) 13, such as a display for outputting a user interface. The user interface may serve as an interface for the user using the data processing system 10. The user interface may include various user interface components.

The user interface may include a user interface component configured to receive input variables and an input regarding whether to designate the input variables as plaintext input variables or ciphertext input variables. For details, reference is made to the third user interface component U3 of FIGS. 10 to 12.

The user interface may include a user interface component configured to output information about a computational load reduction rate of homomorphic operations due to input variables not being designated as ciphertext input variables, when executing the homomorphic operations on the input variables based on the obtained homomorphic encryption binary fragments. For details, reference is made to the fourth user interface component U4 of FIGS. 10 to 12.

The user interface may include a user interface component configured to select whether to perform additional DSE on a specific branching conditional statement, based on being unable to find a solution for plaintext input variables of the specific branching conditional statement included in an execution path of the original program. For details, reference is made to the sixth, seventh, and eighth user interface components U6, U7, and U8 of FIG. 13.

The user interface may include a user interface component configured to request to input a solution for plaintext input variables of a specific branching conditional statement, based on being unable to find the solution for the plaintext input variables of the specific branching conditional statement included in an execution path of the original program. The user interface component may be configured to display information about the specific branching conditional statement. For details, reference is made to the tenth and eleventh user interface components U10 and U11 of FIG. 14.

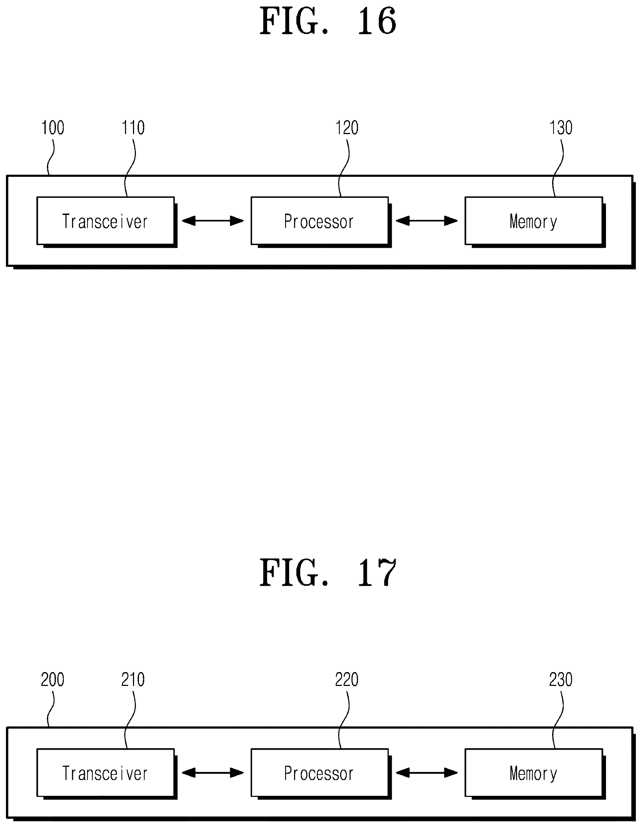

FIG. 16 illustrates a block diagram of a device for data processing according to at least one embodiment of the present disclosure.

FIG. 16 illustrates a client device 100. The client device 100 may include a transceiver 110, a processor 120, and a memory 130.

In an embodiment where the data processing system 10 of FIG. 14 is implemented as a client-server architecture, the client device 100 is configured to perform the above-described operations of the client.

The processor 120 may be configured to obtain the source code of an original program and transmit the source code of the original program to a server device 200 for data processing. The source code of the original program may be obtained based on user inputs. Additionally, the processor 120 may be configured to obtain input variables from the user and obtain information about which of the input variables needs to be subjected to homomorphic encryption.

Additionally, the processor 120 may include the code analyzer 1 or the unmodified FHE compiler 2 described above, or be configured to perform corresponding operations.

Additionally, the processor 120 may be configured to detect a user input and directly process a corresponding command or request or transmit the command or request to the server device 200.

The above-described operations of the client, which have not been explained with reference to FIG. 16, may be performed by the client device 100.

FIG. 17 illustrates a block diagram of a device for data processing according to at least one embodiment of the present disclosure.

FIG. 17 illustrates the server device 200. The server device 200 may include a transceiver 210, a processor 220, and a memory 230.

In an embodiment where the data processing system 10 of FIG. 14 is implemented as a client-server architecture, the server device 200 is configured to perform the above-described operations of the server.

The processor 220 may be configured to obtain FHE-compiled code fragments and perform homomorphic operations on input variables received from the client device 100 based on the obtained code fragments.

Additionally, the processor 220 may include the code analyzer 1, the unmodified FHE compiler 2, or the client request handler 3 described above, or be configured to perform corresponding operations.

The above-described operations of the server, which have not been explained with reference to FIG. 17, may be performed by the server device 200.

In another aspect of the present disclosure, the above-described proposals or inventive operations may also be provided as code capable of being implemented, performed, or executed by a "computer" (i.e., a comprehensive concept including a system-on-chip (SoC) or a processor (or microprocessor), a computer-readable storage medium including the aforementioned code, or a computer program product. The scope of the present disclosure may be extended to the code, the computer-readable storage medium including the code, or the computer program product.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

The exemplary embodiments of the present disclosure have been provided to enable those skilled in the art related to the present disclosure to implement and practice the present disclosure. Although the above description has been provided with reference to the exemplary embodiments of the present disclosure, it will be understood by those skilled in the art that the present disclosure as set forth in the claims below may be modified and varied in various ways. Therefore, the present disclosure is intended to provide the broadest scope consistent with the principles and novel features disclosed herein, rather than being limited to the embodiments disclosed herein.

## Claims

1. A data processing system (10) comprising:
at least one processor (11-1, 11-2, 11-3); and
a memory (12-1, 12-2, 12-3) configured to store data obtained by the at least one processor (11-1, 11-2, 11-3),
wherein the at least one processor (11-1, 11-2, 11-3) is configured to:
obtain source code of an original program;
classify variables in the source code as plaintext input variables or ciphertext input variables;
generate code fragments corresponding to execution paths in the source code, excluding execution paths in which branch conditional statements include the variables classified as ciphertext input variables; and
compile the generated code fragments to obtain homomorphic encryption binary fragments.

2. The data processing system (10) of claim 1, wherein the at least one processor (11-1, 11-2, 11-3) is further configured to:
obtain input variables, wherein each input variable is a plaintext input variable or a ciphertext input variable; and
execute homomorphic operations on the input variables that are plaintext input variables, based on homomorphic encryption binary fragments including branch conditional statements satisfied by the input variables that are plaintext input variables.

3. The data processing system (10) of claim 2, wherein the at least one processor (11-1, 11-2, 11-3) is further configured to provide a result of the execution of the homomorphic operations to a user.

4. The data processing system (10) of any one of claims 1 to 3, wherein the at least one processor (11-1, 11-2, 11-3) is further configured to:
perform dynamic symbolic execution on the source code; and
obtain code fragments for each execution path of the source code on which the dynamic symbolic execution is performed.

5. The data processing system (10) of claim 4, wherein the at least one processor (11-1, 11-2, 11-3) is further configured to:
for each of the execution paths in which branch conditional statements include the variables classified as ciphertext input variables, perform the dynamic symbolic execution on a partial path preceding the branch conditional statement including the variable classified as a ciphertext input variable;
obtain code fragments for the partial paths on which the dynamic symbolic execution is performed; and
combine the obtained code fragments for the partial paths with code fragments for remaining partial paths following the branch conditional statements including the variables classified as ciphertext input variables.

6. The data processing system (10) of claim 4, wherein the at least one processor (11-1, 11-2, 11-3) is configured to:
for each execution path in which a solution cannot be found for a variable included in a specific branch conditional statement that is classified as a plaintext input variable, perform the dynamic symbolic execution on a partial path preceding the specific branch conditional statement;
obtain code fragments for the partial paths on which the dynamic symbolic execution is performed; and
combine the obtained code fragments for the partial paths with code fragments for remaining partial paths following the specific branch conditional statements.

7. The data processing system (10) of any one of claims 2 to 3, wherein the at least one processor (11-1, 11-2, 11-3) is configured to:
match the generated code fragments with branch conditional statements corresponding to the generated code fragments;
identify branch conditional statements that are satisfied by the plaintext input variables of the input variables; and
execute the homomorphic operations on the plaintext input variables based on code fragments matching the identified branch conditional statements.

8. The data processing system (10) of any one of claims 1 to 7, wherein branch conditional statements corresponding to the generated code fragments are not compiled.

9. The data processing system (10) of any one of claims 2 to 3, further comprising a display configured to output a user interface,
wherein the user interface comprises a user interface component configured to receive the input variables and an input regarding whether to designate the input variables as ciphertext input variables.

10. The data processing system (10) of claim 9, wherein the user interface further comprises a second user interface component configured to output information about a computational load reduction rate of homomorphic operations due to the input variables not being designated as ciphertext input variables, in response to executing the homomorphic operations on the input variables based on the homomorphic encryption binary fragments.

11. The data processing system (10) of claim 9, wherein the user interface further comprises a second user interface component configured to select whether to perform additional dynamic symbolic execution on a specific branch conditional statement included in an execution path, based on an inability to find a solution for a plaintext input variable included in the specific branch conditional statement.

12. The data processing system (10) of claim 9, wherein the user interface further comprises a second user interface component configured to request input of a solution for a plaintext input variable included in a specific branch conditional statement included in an execution path, based on an inability to find the solution, and
wherein the second user interface component is configured to display information about the specific branch conditional statement.

13. A data processing method comprising:
obtaining source code of an original program;
classifying variables in the source code as plaintext input variables or ciphertext input variables;
generating code fragments corresponding to execution paths in the source code, excluding execution paths in which branch conditional statements include the variables classified as ciphertext input variables, and
compiling the generated code fragments to obtain homomorphic encryption binary fragments.

14. The data processing method of claim 13, comprising:
obtaining input variables, each of the input variables being a plaintext input variable or a ciphertext input variable; and
executing homomorphic operations on the input variables that are plaintext input variables, based on homomorphic encryption binary fragments including branch conditional statements satisfied by the input variables that are plaintext input variables.

15. A non-transitory computer-readable medium storing computer-executable instructions that, when executed by at least one processor (11-1, 11-2, 11-3), cause the at least one processor (11-1, 11-2, 11-3) to perform operations comprising:
obtaining source code of an original program;
classifying variables in the source code as plaintext input variables or ciphertext input variables;
generating code fragments corresponding to execution paths in the source code, excluding execution paths in which branch conditional statements include the variables classified as ciphertext input variables, and
compiling the generated code fragments to obtain homomorphic encryption binary fragments.
